# EUROPÄISCHE PATENTANMELDUNG

(11) **EP 1 367 265 A1**
(43) Veröffentlichungstag der Anmeldung: **03.12.2003**
(21) Anmeldenummer: 03405342.1
(22) Anmeldetag: 19.05.2003
(51) Int. Cl.: F16B 13/00, F16B 13/06, F16B 13/12, F16B 13/02

(54) **Kunststoffdübel**

(30) Priorität: 29.05.2002 DE 10224117
(71) Anmelder: HILTI Aktiengesellschaft, 9494 Schaan (LI)
(72) Erfinder: Scheffler, Peter, 89278 Nersingen-Strass (DE); Zimmerer, Claudia, 86153 Augsburg (DE); Trautwein, Stefan, 89281 Altenstadt (DE); Schubert, Anton, 88451 Dettingen (DE)
(74) Vertreter: Wildi, Roland

(57) **Zusammenfassung**

Ein Kunststoffdübel (1) hat einen Spreizbereich (2) und einen Schaft (3), wobei die Wandung (21) des Schafts (3) mittels aussenseitig, spiralförmig angeordneten Stegen (6.1 bis 6.4) verdickt ist. Im Bereich des Dübelkopfs (7) sind entlang des Umfangs des Schafts (3) Vorsprünge (8, 9.1 bis 9.3) vorgesehen, wobei der Vorsprung (8) auf der Seite des Angusses (10) eine kopfseitige Hinterschnittfläche (11) aufweist, die in einem Winkel (α) kleiner 90° zur Dübelachse (12) geneigt ist.

## Beschreibung

### Technisches Gebiet

Die Erfindung betrifft einen Kunststoffdübel mit einem Spreizbereich und einem Schaft mit einer Wandung.

### Stand der Technik

Kunststoffdübel dienen der Befestigung von Befestigungsmitteln in verschiedenen Untergründen, z. B. von Schrauben in einem Mauerwerk. Die Kunststoffdübel werden für die unterschiedlichen Anwendungen, beispielsweise als Rahmen- oder Langschaftdübel, in verschiedenen Längen bereitgestellt, wobei die Länge des Spreizbereichs bei allen Dübellängen unverändert bleibt.

Die bekannten Kunststoffdübel werden im Spritzgussverfahren hergestellt. Damit die Form gleichmässig gefüllt wird, keine Bindenähte auftreten und Verzug vermieden wird, befindet sich der Anspritzpunkt in der Regel an der Dübelspitze.

Nachteilig an der bekannten Lösung ist, dass mit dem herkömmlichen Werkzeugaufbau und den bisher bekannten Geometrien des Dübelschafts ein Kunststoffdübel beispielsweise mit einem Durchmesser von 10 mm nur bis zu einer Gesamtlänge von ca. 250 mm hergestellt werden kann. Bei grösseren Dübellängen muss zur Füllung der Form bis zum Dübelkopf ein sehr hoher Spritzdruck aufgebaut werden. Dabei wird der Kunststoff im Spreizbereich stärker verdichtet als im Dübelschaft, was zu einem unerwünschten ungleichen Materialverhalten des gefertigten Kunststoffdübels über dessen Länge führt. Wird der Anspritzpunkt in den mittleren Bereich des Dübelschafts gelegt, tritt entlang des Dübels Verzug auf. Des Weiteren schrumpft bei der Abkühlung des Kunststoffs dieser auf den Kern auf, so dass hohe Kräfte aufgebracht werden müssen, um den Kern aus dem Kunststoffdübel entformen zu können. Bei grösseren Dübellängen wird der Spreizbereich des Kunststoffdübels beim Herausziehen des Kerns gelängt und reisst ab.

### Darstellung der Erfindung

Der vorliegenden Erfindung liegt die Aufgabe zugrunde, einen Kunststoffdübel zu schaffen, der auch bei grösseren Dübellängen gleichmässig füllbar und aus einer Form entformbar ist, wobei eine hohe Qualität und ein geringer Ausschuss bei der Produktion des Kunststoffdübels gewährleistet ist.

Die Aufgabe ist durch die Merkmale des Anspruchs 1 gelöst. Gemäss der Erfindung hat ein Kunststoffdübel einen Spreizbereich und einen Schaft mit einer Wandung. Die Wandung weist in zumindest einem, sich in axialer Längsrichtung des Kunststoffdübels erstreckenden Wandabschnitt eine grössere, verdickte Wandstärke auf, als in dem zumindest einen benachbarten Wandabschnitt. Der verdickte Wandabschnitt erstreckt sich zumindest über 50% der Dübellänge und ist durchgehend ausgebildet.

Der verdickte Wandabschnitt ermöglicht ein gleichmässiges Ansteigen des, im Bereich der Dübelspitze eingespritzten Kunststoffs entlang der gesamten Dübelachse und die vollständige Füllung der Form. Eine übermässige Verdichtung im Spreizbereich des Kunststoffdübels ist verhindert, da gegenüber den bekannten Lösungen der Spritzdruck beim Einspritzen des Kunststoffs reduziert ist. Damit schrumpft das Kunststoffmaterial weniger auf den Kern, wodurch die Kräfte zur Entformung des Kerns gegenüber den bisherigen Ausführungen von Kunststoffdübeln geringer sind. Eine Verlegung des Angusses in die Mitte des Kunststoffdübels ist nicht notwendig, so dass die damit verbundenen Nachteile auch bei langen Kunststoffdübeln nicht auftreten. Der erfindungsgemässe Kunststoffdübel weist auf seiner gesamten Länge im Wesentlichen die gleichen Materialeigenschaften auf. Mit der Anpassung der Abmessungen des verdickten Wandabschnitts können verschiedene Dübellängen bei konstanter Qualität des Kunststoffdübels realisiert werden.

Vorzugsweise ist der verdickte Wandabschnitt als zumindest ein Steg ausgebildet, der an der aussenseitigen und/oder innenseitigen Kontur des Kunststoffdübels angeordnet ist. Bevorzugt sind mehr als ein Steg an der aussenseitigen und/oder innenseitigen Kontur des Kunststoffdübels angeordnet, wobei die Stege beispielsweise gleichmässig am Umfang des Kunststoffdübels verteilt an dessen aussenseitigen und/oder innenseitigen Kontur verlaufen. Bei der Anordnung und Ausgestaltung des zumindest einen Stegs an der aussenseitigen Kontur ist darauf zu achten, dass der Aussendurchmesser des Kunststoffdübels nicht derart gross wird, dass die Klemmwirkung des verspreizten Dübels für eine sichere Befestigung nicht mehr ausreicht. Bei der Anordnung und Ausgestaltung des zumindest einen Stegs an der innenseitigen Kontur muss die Einführung des Befestigungsmittels gewährleistet bleiben. Bei besonders langen Ausführungen des erfindungsgemässen Kunststoffdübels werden zur Gewährleistung des gleichmässigen und vollständigen Füllens der Form mehrere Stege an der aussen- und innenseitigen Kontur des Kunststoffdübels angeordnet.

Bevorzugt ist der zumindest eine Steg spiralförmig an der aussenseitigen und/oder innenseitigen Kontur des Kunststoffdübels angeordnet. Insbesondere wenn mehr als ein Steg am Kunststoffdübel angeordnet ist, wird verhindert, dass ein Steg beim Füllen mit dem eingespritzten Kunststoff bevorzugt und die Form nicht gleichmässig gefüllt wird.

In einer weiteren vorteilhaften Ausführung des erfindungsgemässen Kunststoffdübels ist der zumindest eine Steg parallel zur Dübellängsachse an der aussenseitigen und/oder innenseitigen Kontur des Kunststoffdübels angeordnet. Insbesondere wenn mehr als ein Steg am Kunststoffdübel angeordnet ist, wird verhindert, dass ein Steg beim Füllen mit dem eingespritzten Kunststoff bevorzugt und die Form nicht gleichmässig gefüllt wird.

Vorzugsweise erstreckt sich der zumindest eine Steg entlang des Schafts. Der Spreizbereich des Kunststoffdübels weist üblicherweise bei allen ausgeführten Dübellängen die gleiche Länge auf. Auch die Ausgestaltung des Spreizbereichs ist bei den verschiedenen Ausführungsformen im Wesentlichen identisch. Der zumindest eine Steg zur Schaffung des verdickten Wandabschnitts wird deshalb entlang der aussen- und/oder innenseitigen Kontur des Schafts des Dübels vorgesehen. Bevorzugt ist der zumindest eine Steg an der aussenseitigen Kontur des Schafts spiralförmig ausgebildet. Ist der zumindest eine Steg an der innenseitigen Kontur angeordnet, verläuft dieser bevorzugt parallel zur Dübelachse ausgebildet, womit eine Hinterschneidung beim Setzen des Befestigungsmittels vermieden wird.

Bevorzugt ist zumindest ein als Haltemittel ausgebildeter Vorsprung vorgesehen, der eine kopfseitige Hinterschnittfläche zum Halten des Kunststoffdübels in einer Form zur Entfernung eines Kerns aufweist, die in einem Winkel kleiner als 90° zur Dübellängsachse geneigt ist. Das zumindest eine Haltemittel ist vorzugsweise an der Seite des Kunststoffdübels angeordnet, die an der Angussseite der Spritzgussmaschine liegt. Werden mehr als ein Haltemittel an einem Kunststoffdübel vorgesehen, sind diese bevorzugt gleichmässig entlang des Kunststoffdübel, z. B. im Bereich des Dübelkopfs angeordnet. Bei einer solchen Ausführungsform weisen die als Haltemittel ausgebildeten Vorsprünge, die auf der Schliessseite der Spritzgussmaschine liegen, eine kopfseitige Hinterschnittfläche auf, die in einem Winkel von 90° oder grösser als 90° zur Dübellängsachse geneigt ist. Die unterschiedliche Ausgestaltung der Vorsprünge unterstützt beim Öffnen der Maschine die halbseitige Entformung des Kunststoffdübels. Durch die spitzwinklige Ausführung der angussseitigen Vorsprünge wird der Kunststoffdübel in der Form zur Entfernung des Kerns gehalten. Die beim Entformen des Kerns entstehenden Kräfte werden durch die hakenförmigen Vorsprünge am Schaft gleichmässig übertragen und verhindern, dass die Vorsprünge während diesem Vorgang aus der Form rutschen können. Des Weiteren wird durch die verbesserte Krafteinleitung in den Kunststoffdübel das Längen und Abreissen des Kunststoffdübels beim Entformen des Kerns verhindert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand zweier Ausführungsbeispiele näher erläutert. Es zeigen:
- Fig. 1: Eine Längsansicht eines ersten Ausführungsbeispiels des erfindungsgemässen Kunststoffdübels;
- Fig. 2: einen Querschnitt des ersten Ausführungsbeispiels des erfindungsgemässen Kunststoffdübels entlang der Schnittlinie II-II;
- Fig.3: einen Längsschnitt eines zweiten Ausführungsbeispiels des erfindungsgemässen Kunststoffdübels; und
- Fig. 4: einen Querschnitt des zweiten Ausführungsbeispiels des erfindungsgemässen Kunststoffdübels entlang der Schnittlinie IV-IV.

Grundsätzlich sind in den Figuren gleiche Teile mit den gleichen Bezugszeichen versehen.

### Wege zur Ausführung der Erfindung

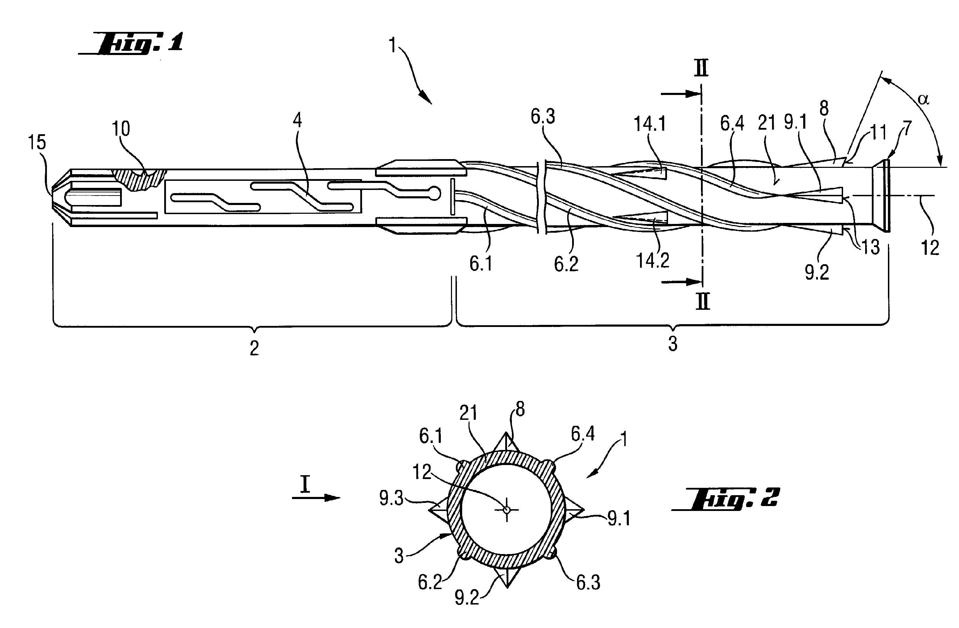

Die Fig. 1 und 2 zeigen ein erstes Ausführungsbeispiel des erfindungsgemässen Kunststoffdübels. Eine Ansicht des erfindungsgemässen Kunststoffdübels ist in Fig. 1 dargestellt. Der Kunststoffdübel 1 hat einen Spreizbereich 2 und einen Schaft 3. Der Spreizbereich 2 ist mit Schlitzen 4 versehen, die das Spreizen des Spreizbereichs 2 beim Setzen des Befestigungsmittels ermöglichen. Am Schaft 3 sind mehrere Stege 6.1 bis 6.4 spiralförmig angeordnet, die die Wandung 21 des Schafts 3 über dessen gesamte Länge verdicken.

Im Bereich des Dübelkopfs 7 sind vier Vorsprünge 8, 9.1, 9.2 und 9.3 gleichmässig entlang des Umfangs des Schafts 3 angeordnet. Die Vorsprünge 8, 9.1, 9.2, 9.3 weisen jeweils eine keilförmige Ausgestaltung auf, die von der äusseren Kontur des Schafts 3 in Setzrichtung des Kunststoffdübels 1 in Richtung des Dübelkopfs 7 kontinuierlich bis zum Ende des Vorsprungs 8, 9.1, 9.2, bzw. 9.3 zunimmt. An dem in Richtung des Dübelkopfs 7 gelegenen Ende des Vorsprungs 8, 9.1, 9.2, bzw. 9.3 ist in Richtung der Dübelachse 12 jeweils eine kopfseitige Hinterschnittfläche 11, bzw. 13 ausgebildet. Der Vorsprung 8, auf der Seite des Angusses 10, hat eine kopfseitige Hinterschnittfläche 11, die in einem Winkel kleiner als 90° zur Dübelachse 12 geneigt ist. Die übrigen, im Bereich des Dübelkopfs 7 angeordneten Vorsprünge 9.1, 9.2, 9.3 weisen eine kopfseitig auskragende Hinterschnittfläche 13 auf, die in einem Winkel α von 90° oder in einem Winkel grösser als 90° zur Dübelachse 12 geneigt ist. In diesem Ausführungsbeispiel sind in einem Abstand zu den Vorsprüngen 8, 9.1, 9.2, 9.3 in Setzrichtung des Kunststoffdübels 1 zusätzliche Vorsprünge 14.1, 14.2 vorgesehen, die im Wesentlichen der Ausgestaltung der Vorsprünge 9.1, 9.2, 9.3 entsprechen.

Bei der Fertigung des Kunststoffdübels 1 in der Spritzgussmaschine wird der Kunststoff am Anguss 10 in das geschlossene Werkzeug eingespritzt. Mittels der spiralförmig am Schaft 3 aussenseitig angeordneten Stege 6.1 bis 6.4 wird die Form vom Dübelende 15 bis zum Dübelkopf 7 gleichmässig und vollständig gefüllt. Die Wandung 21 des Schafts 3 ist partiell genügend verdickt, um den notwendigen Spritzdruck zur Fertigung des Kunststoffdübels 1 auf ein Minimum zu reduzieren. Wenn der Kunststoffdübel 1 eine ausreichende Formstabilität aufweist, wird durch Verfahren der Schliessseite das Werkzeug, beziehungsweise die Form geöffnet. Die schliessseitig vorhandenen Vorsprünge 9.1, 9.2, 9.3 unterstützen mit deren Ausgestaltung die Entformung. Der Vorsprung 8 hält durch seine auskragende Hinterschnittfläche 11 den Kunststoffdübel 1 noch halbseitig in der Ausgussform, damit der Formkern aus dem Kunststoffdübel 1 entfernt werden kann. Die beim Entformen des Kerns auftretenden Kräfte werden mittels des Vorsprungs 8 weitgehend gleichförmig in den, durch die angeordneten Stege 6.1 bis 6.4 partiell eine verdickte Wandung 21 aufweisenden Schaft 3 übertragen. Nach dem Entfernen des Kerns wird der Kunststoffdübel 1 mit Hilfe von Auswerfern vollständig aus dem Werkzeug entfernt.

Fig. 2 zeigt einen Querschnitt des ersten Ausführungsbeispiels des erfindungsgemässen Kunststoffdübels entlang der Schnittlinie II-II in der Fig. 1. Die Wandung 21 des Schafts 3 des Kunststoffdübels 1 ist im Bereich der angeordneten Stege 6.1 bis 6.4 verdickt. Die Vorsprünge 8, 9.1, 9.2, 9.3 sind in der Ansicht dargestellt.

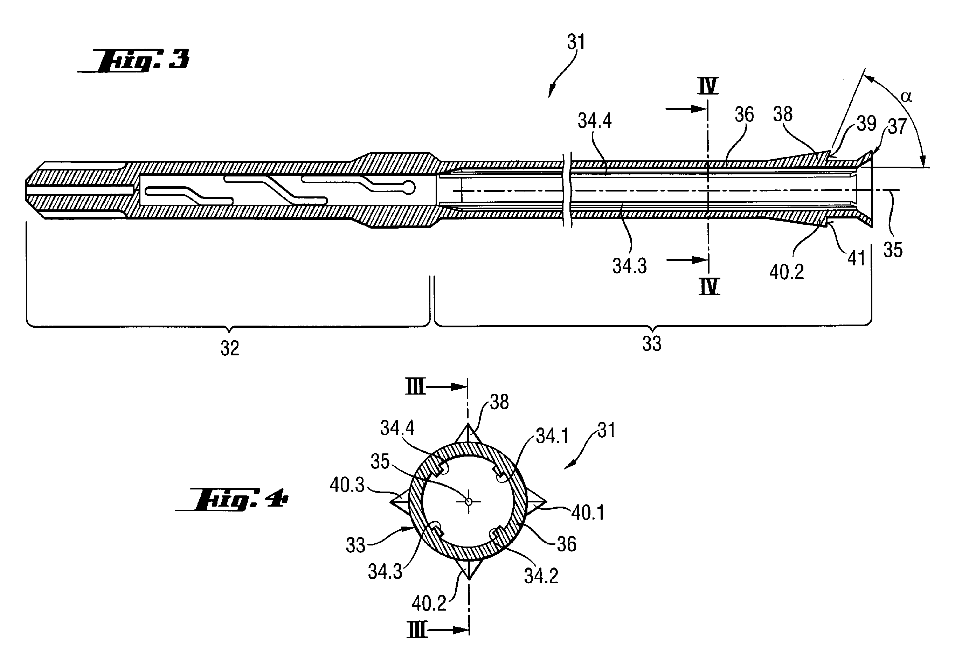

Die Fig. 3 und 4 betreffen ein zweites Ausführungsbeispiel des erfindungsgemässen Kunststoffdübels. In der Fig. 3 ist ein Längsschnitt des erfindungsgemässen Kunststoffdübels gezeigt. Der Kunststoffdübel 31 hat - analog zum Kunststoffdübel 1 - einen Spreizbereich 32 und einen Schaft 33. Im Gegensatz zu den zuvor beschriebenen Stegen 6.1 bis 6.4 am Schaft 3 des Kunststoffdübels 1 sind die Stege 34.1 bis 34.4 parallel zur Dübelachse 35 an der innenseitigen Kontur des Schafts 33 angeordnet. Mit dieser Ausgestaltung der Stege 34.1 bis 34.4 wird eine Hinterschneidung eines in den Kunststoffdübel eingesetztes Befestigungsmittels verhindert. Die Wandung 36 des Schafts 33 ist genügend verdickt, um den notwendigen Spritzdruck zur Fertigung des Kunststoffdübels 31 auf ein Minimum zu reduzieren. Des Weiteren sind im Bereich des Dübelkopfs 37 ein Vorsprung 38 und drei weitere Vorsprünge 40.1 bis 40.3 vorgesehen. Der Vorsprung 38 weist eine spitzwinklige, kopfseitige Hinterschnittfläche 39 auf, die in einem Winkel α kleiner als 90° zur Dübelachse 35 geneigt ist. Die kopfseitige Hinterschnittfläche 41 der Vorsprünge 40.1 bis 40.3 ist dagegen in einem Winkel von 90° oder grösser als 90° in Richtung der Dübelachse 35 geneigt.

Fig. 4 stellt einen Querschnitt des zweiten Ausführungsbeispiels des erfindungsgemässen Kunststoffdübels entlang der Schnittlinie IV-IV in der Fig. 3 dar.

Zusammenfassend ist festzustellen, dass ein Kunststoffdübel geschaffen wurde, der in verschiedenen Dübellängen herstellbar ist. Dies bei einer hohen Qualität des Kunststoffdübels und einem geringen Ausschuss bei dessen Produktion.

## Patentansprüche

1. Kunststoffdübel mit einem Spreizbereich (2; 32) und einem Schaft (3; 33) mit einer Wandung (21; 36), **dadurch gekennzeichnet, dass** die Wandung (21; 36) in zumindest einem, sich in axialer Längsrichtung des Kunststoffdübels (1; 31) erstreckenden Wandabschnitt eine grössere Wandstärke aufweist als in dem zumindest einen benachbarten Wandabschnitt, wobei der verdickte Wandabschnitt sich zumindest über 50% der Dübellänge erstreckt und durchgehend ausgebildet ist.

2. Kunststoffdübel nach Anspruch 1, **dadurch gekennzeichnet, dass** der verdickte Wandabschnitt als zumindest ein Steg (6.1 bis 6.4; 34.1 bis 34.4) ausgebildet ist, der an der aussenseitigen und/oder innenseitigen Kontur des Kunststoffdübels (1; 31) angeordnet ist.

3. Kunststoffdübel nach Anspruch 1 oder 2, **dadurch gekennzeichnet, dass** der zumindest eine Steg (6.1 bis 6.4) spiralförmig an der aussenseitigen und/oder innenseitigen Kontur des Kunststoffdübels (1) angeordnet ist.

4. Kunststoffdübel nach Anspruch 1 oder 2, **dadurch gekennzeichnet, dass** der zumindest eine Steg (34.1 bis 34.4) parallel zur Dübellängsachse (35) an der aussenseitigen und/oder innenseitigen Kontur des Kunststoffdübels (31) angeordnet ist.

5. Kunststoffdübel nach einem der Ansprüche 1 bis 4, **dadurch gekennzeichnet, dass** der zumindest eine Steg (6.1 bis 6.4; 34.1 bis 34.4) sich entlang des Schafts (3; 33) erstreckt.

6. Kunststoffdübel nach Anspruch 6, **dadurch gekennzeichnet, dass** das zumindest ein als Haltemittel ausgebildeter Vorsprung (8; 38) vorgesehen ist, der eine kopfseitige Hinterschnittfläche (11; 39) aufweist, die in einem Winkel (α) kleiner als 90° zur Dübellängsachse (12; 35) geneigt ist, zum Halten des Kunststoffdübels (1; 31) in einer Form zur Entfernung eines Kerns.
